# EUROPÄISCHE PATENTSCHRIFT

(11) **EP 3 313 621 B1**
(45) Veröffentlichungstag und Bekanntmachung des Hinweises auf die Patenterteilung: **21.10.2020**
(21) Anmeldenummer: 16721830.4
(22) Anmeldetag: 12.05.2016
(51) Int. Cl.: B25F 5/00

(54) **HANDWERKZEUGMASCHINE, INSBESONDERE ELEKTROHANDWERKZEUGMASCHINE**
HAND-HELD POWER TOOL, IN PARTICULAR ELECTRIC HAND TOOL
MACHINE-OUTIL PORTATIVE, NOTAMMENT MACHINE-OUTIL ÉLECTROPORTATIVE

(30) Priorität: 24.06.2015 DE 102015211707
(43) Veröffentlichungstag der Anmeldung: 02.05.2018
(73) Patentinhaber: Robert Bosch GmbH, 70442 Stuttgart (DE)
(72) Erfinder: FREIENSTEIN, Heiko, 71263 Weil der Stadt (DE); VISEL, Benjamin, 75378 Bad Liebenzell-Moettlingen (DE); STEURER, Christoph, 73660 Urbach (DE); MOENNICH, Joerg, 70437 Stuttgart (DE); HERR, Tobias, 70569 Stuttgart (DE); KOENIG, Anja, 72770 Reutlingen (DE)
(86) Internationale Anmeldenummer: PCT/EP2016/060674
(87) Internationale Veröffentlichungsnummer: WO 2016/206860

(56) Entgegenhaltungen:
- EP-A1- 2 581 168
- EP-A2- 1 690 648
- WO-A1-2013/136917
- US-A1- 2008 135 272
- US-A1- 2014 070 924
- US-A1- 2014 159 662
- US-A1- 2014 184 397
- US-A1- 2014 240 125

## Beschreibung

Die Erfindung betrifft eine Handwerkzeugmaschine, insbesondere Elektrohandwerkzeugmaschine, mit einem Identifikationsmodul, das einen Transponder aufweist, der zumindest einen Datenspeicher zum Speichern von Identifikationsdaten sowie ein Funkmodul zum Versenden der identifikationsdaten umfasst.

### Stand der Technik

Handwerkzeugmaschinen der eingangs genannten Art sind aus dem Stand der Technik grundsätzlich bekannt. Die Inventarisierung von mobilen Gegenständen, insbesondere Handwerkzeugmaschinen, erfolgt vorwiegend durch eine manuelle Kennzeichnung des jeweiligen Gegenstands, beispielsweise mit einer Inventarnummer oder Seriennummer, die abgelesen wird. Meist wird Lagerbestand handschriftlich auf Papier oder per Verwaltungssoftware dokumentiert. Damit können dem jeweiligen Gegenstand auch weitere Merkmale wie aktueller Lagerort, zugeordneter Mitarbeiter, Prüfzyklus, Benutzungszeit oder dergleichen zugeordnet werden.

Um die Inventarisierung zu vereinfachen ist es außerdem bereits bekannt, auf derartige Gegenstände, insbesondere auf Handwerkzeugmaschinen, ein Identifikationsmodul anzubringen, das drahtlos mit einer Basisstation kommuniziert. Das Identifikationsmodul weist dazu einen Transponder auf, der zumindest einen Datenspeicher zum Speichern von Identifikationsdaten sowie ein Funkmodul zum Versenden der Identifikationsdaten umfasst. Wird der Transponder angesprochen, insbesondere drahtlos angefunkt, so sendet er die im Datenspeicher hinterlegten Identifikationsdaten zu seiner Identifizierung aus beziehungsweise zurück an die Basisstation. Die Basisstation erfasst die Daten und leitet sie beispielsweise an einen Zentralserver, wo sie beispielsweise verifiziert oder aktualisiert wird.

Die Offenlegungsschrift US 2014/0240125 A1 betrifft eine Handwerkzeugmaschine, welche ein Identifikationsmodul sowie ein Funkmodul aufweist, wobei das Identifikationsmodul in einem Gehäuse der Handwerkzeugmaschine integriert angeordnet ist. Das Identifikationsmodul ist mit einem Energiespeicher der Handwerkzeugmaschine verbunden und weist zusätzlich einen eigenen Energiespeicher auf. Das Dokument US 2008/0135272 A1 beschreibt eine Handwerkzeugmaschine, welche einen Energiespeicher und ein Identifikationsmodul aufweist.

### Offenbarung der Erfindung

Die erfindungsgemäße Handwerkzeugmaschine mit den Merkmalen des Anspruchs 1 hat den Vorteil, dass das Identifikationsmodul als fester Bestandteil der Handwerkzeugmaschine ausgebildet ist. Dazu ist erfindungsgemäß vorgesehen, dass das Identifikationsmodul in ein Gehäuse der Handwerkzeugmaschine integriert angeordnet ist. Dadurch muss das Identifikationsmodul nicht mehr nachträglich außen an der Handwerkzeugmaschine angebracht werden, wo es Verschmutzung und Belastungen im Betrieb ausgesetzt ist. Durch die integrierte Anordnung in dem Gehäuse der Handwerkzeugmaschine ist es geschützt und kann bereits mit der Handwerkzeugmaschine mitgeliefert werden. Insbesondere ist vorgesehen, dass das Identifikationsmodul als fester Bestandteil der Handwerkzeugmaschine einen wieder beschreibbaren Datenspeicher aufweist, sodass die Identifikationsdaten der Handwerkzeugmaschine auch zu einem späteren Zeitpunkt nach der Montage der Handwerkzeugmaschine in das Identifikationsmodul beziehungsweise in dessen Datenspeicher eingeschrieben werden können. Zweckmäßigerweise weist das Funkmodul dazu neben einer Sendeeinheit auch eine Empfangseinheit auf, um die zu hinterlegenden Identifikationsdaten drahtlos zu empfangen. Alternativ kann vorgesehen sein, dass das Identifikationsmodul drahtgebunden kontaktierbar ist, um insbesondere ein Erstbeschreiben beziehungsweise Einrichten des Datenspeichers bei oder nach der Montage zu ermöglichen.

Gemäß einer bevorzugten Weiterbildung der Erfindung ist vorgesehen, dass das Gehäuse eine Aufnahme aufweist, in welcher das Identifikationsmodul angeordnet ist. Durch die Aufnahme ist das Identifikationsmodul sicher in dem Gehäuse befestigbar. Insbesondere ist vorgesehen, dass das Identifikationsmodul zumindest im Wesentlichen spielfrei in der Aufnahme anordenbar ist, sodass im Betrieb der Handwerkzeugmaschine keine Klappergeräusche oder dergleichen entstehen. Insbesondere ist vorgesehen, dass das Identifikationsmodul unter Zwischenschaltung wenigstens eines Dämpfungselements, das elastisch verformbar ausgebildet ist, in der Aufnahme gehalten ist.

Besonders bevorzugt ist vorgesehen, dass das Identifikationsmodul in der Aufnahme austauschbar angeordnet ist. Das Identifikationsmodul lässt sich somit vollständig aus dem Gehäuse der Handwerkzeugmaschine entfernen und beispielsweise durch ein anderes Identifikationsmodul ersetzen. Dadurch kann beispielsweise, insbesondere in dem Fall, dass der Datenspeicher nicht überschreitbar ist, die Identität der Handwerkzeugmaschine durch den Austausch des Identifikationsmoduls verändert oder aktualisiert werden.

Erfindungsgemäß ist vorgesehen, dass das Identifikationsmodul elektrisch mit einem Energiespeicher der Handwerkzeugmaschine verbunden oder verbindbar ist. Die zum Betrieb des Identifikationsmoduls notwendige elektrische Energie wird somit durch den Energiespeicher der Handwerkzeugmaschine, die insbesondere als Elektrohandwerkzeugmaschine ausgebildet ist, zur Verfügung gestellt. Damit ist eine einfache Energieversorgung des Identifikationsmoduls gewährleistet.

Erfindungsgemäß ist vorgesehen, dass das Identifikationsmodul einen eigenen Energiespeicher aufweist. Durch den eigenen Energiespeicher, der insofern unabhängig von einem Energiespeicher der Handwerkzeugmaschine ist, wird elektrische Energie zur Verfügung gestellt, die allein dem Identifikationsmodul zugutekommt. Dadurch kann insbesondere die Betriebsdauer des eigenen Energiespeichers beziehungsweise des Identifikationsmoduls erhöht werden, wobei der Betrieb des Identifikationsmoduls dann auch nicht mehr abhängig ist vom Betrieb der Handwerkzeugmaschine. Dadurch kann auch insbesondere gewährleistet werden, dass eine Inventarisierung der Handwerkzeugmaschine auch dann möglich ist, wenn die Energie des Energiespeichers der Handwerkzeugmaschine erschöpft ist.

Erfindungsgemäß ist außerdem vorgesehen, dass der eigene Energiespeicher des Identifikationsmoduls austauschbar ausgebildet ist. Hierzu weist der eigene Energiespeicher beispielsweise Steck- oder Berührungskontakte auf, die beim Einsetzen in das Identifikationsmodul automatisch in den elektrischen Kontakt mit entsprechenden Gegenkontakten des identifikationsmoduls gebracht werden können. Durch das Austauschen des Energiespeichers lässt sich der Betrieb des Identifikationsmoduls somit auf einfache Art und Weise auf lange Zeit gewährleisten.

Weiterhin ist erfindungsgemäß vorgesehen, dass das Gehäuse der Handwerkzeugmaschine einen eine dem eigenen Energiespeicher zugeordnete Austauschöffnung verschließenden oder freigebenden Deckel aufweist. Durch den Deckel ist das Gehäuse verschließbar, sodass das Identifikationsmodul sicher im inneren des Gehäuses der Handwerkzeugmaschine geschützt ist. Wird der Deckel entfernt beziehungsweise geöffnet, so lässt sich der eigene Energiespeicher des Identifikationsmoduls einfach aus dem Gehäuse entnehmen und beispielsweise durch einen neuen aufgeladenen Energiespeicher ersetzen. Der Deckel ist dazu erfindungsgemäß verschwenkbar, verschiebbar oder lösbar an dem Gehäuse der Handwerkzeugmaschine gehalten. Beispielsweise kann der Deckel zusammen mit dem Gehäuse einen Schraubverschluss oder einen Bajonettverschluss bilden.

Gemäß einer bevorzugten Weiterbildung der Erfindung ist weiterhin vorgesehen, dass das Identifikationsmodul mit einem Steuergerät der Handwerkzeugmaschine drahtgebunden oder drahtlos gekoppelt ist. Dadurch können Informationen zwischen dem Identifikationsmodul und dem Steuergerät ausgetauscht werden. Insbesondere kann dadurch erreicht werden, dass durch das Identifikationsmodul Benutzungsdaten der Handwerkzeugmaschine, wie beispielsweise Benutzungsdauer, Belastung, Fehlermeldungen oder Dergleichen, an die zuvor bereits erwähnte Zentraleinheit/Basisstation weitergeleitet werden.

Bevorzugt ist weiterhin vorgesehen, dass der eigene Energiespeicher wiederaufladbar ausgebildet und elektrisch mit einer Energieversorgung der Handwerkzeugmaschine verbunden oder verbindbar ist. Weist die Handwerkzeugmaschine einen eigenen Energiespeicher oder einen Netzanschlussstecker auf, so ist der eigene Energiespeicher des Identifikationsmoduls durch die von dem Stromnetz oder dem Energiespeicher der Handwerkzeugmaschine zur Verfügung gestellte Energie wiederaufladbar. Dabei weist die Handwerkzeugmaschine, insbesondere das Identifikationsmodul eine Steuereinheit auf, die in Abhängigkeit von der Energieversorgung der Handwerkezugmaschine den eigenen Energiespeicher des Identifikationsmoduls auflädt.

Ferner ist bevorzugt vorgesehen, dass das Identifikationsmodul ein eigenes Modulgehäuse aufweist. Dadurch ist das Identifikationsmodul besonders kompakt ausgebildet und lässt sich insgesamt auf einfache Art und Weise in der Handwerkzeugmaschine montieren und bei Bedarf wieder demontieren, beispielsweise zu Wartungs- oder Reparaturzwecken. Insbesondere ist in dem Gehäuse neben dem Transponder auch der eigene Energiespeicher angeordnet. Besonders bevorzugt sind der Energiespeicher und der Transponder beziehungsweise das Funkmodul auf einer in dem Gehäuse angeordneten Leiterplatte gehalten und durch die Leiterplatte elektrisch miteinander verbunden.

Im Folgenden soll die Erfindung anhand der Zeichnung näher erläutert werden. Dazu zeigen
- Figur 1: eine Elektrohandwerkzeugmaschine in einer perspektivischen Darstellung,
- Figur 2: eine Teilschnittdarstellung der Elektrohandwerkzeugmaschine und
- Figur 3: ein Identifikationsmodul der Handwerkzeugmaschine in einer vereinfachten Darstellung.

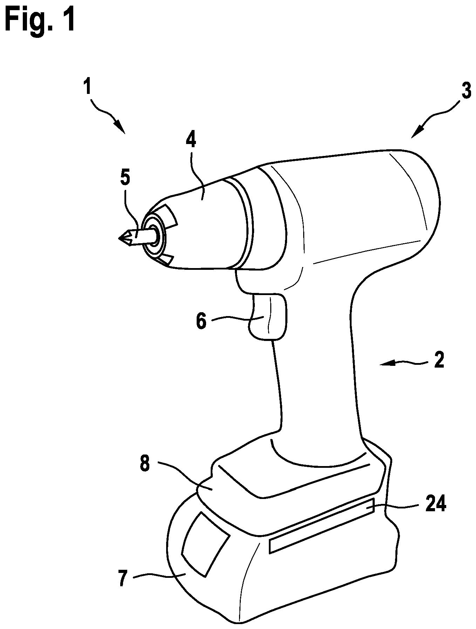

Figur 1 zeigt ein Ausführungsbeispiel einer vorteilhaften Handwerkzeugmaschine 1, die als Elektrohandwerkzeugmaschine ausgebildet ist. Dazu ist die Handwerkzeugmaschine 1 in pistolenbauform mit einem Griffteil 2 und einem im Wesentlichen senkrecht dazu angeordneten Werkzeugteil 3 ausgebildet. In dem Werkzeugteil sind ein Elektromotor, ein mit dem Elektromotor wirkverbundenes Getriebe sowie ein mit dem Getriebe wirkverbundener Werkzeughalter 4 in Form eines Spannfutters für ein Werkzeug 5, das vorliegend als Schrauber-Bit ausgebildet ist, gehalten. In dem Griffteil 2 ist eine Elektronik 9 zum Betreiben des Elektromotors angeordnet sowie ein Betätigungsschalter 6, mittels dessen ein Benutzer ein Drehmoment und/oder eine Drehzahl des Elektromotors anfordern kann. Am freien Endbereich 8 des Griffteils 2 ist ein austauschbares Energiespeichermodul 7 (Akkupack) lösbar gehalten.

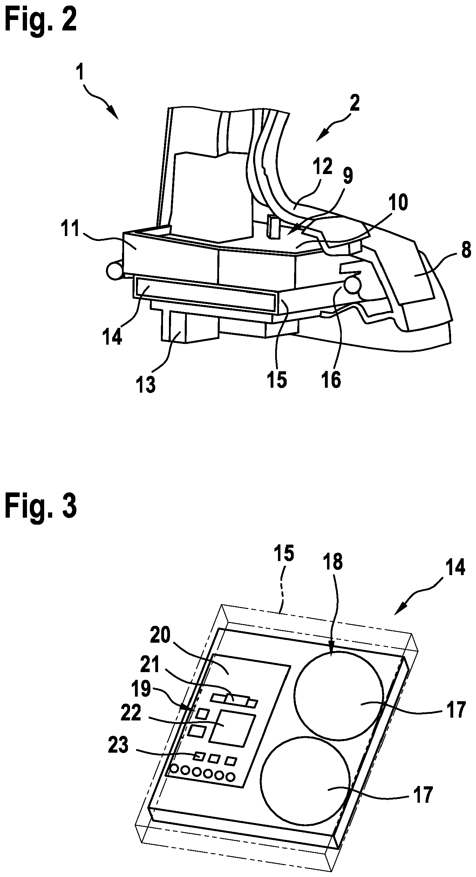

Figur 2 zeigt eine Schnittdarstellung durch das Griffteil 2 in dem freien Endbereich 8. In dem Endbereich 8 ist wie bereits erwähnt, die Elektronik 9 angeordnet, welche beispielsweise einen Mikroprozessor und/oder einen integrierten Schaltkreis umfasst, um die von dem Energiespeichermodul 7 zur Verfügung gestellte elektrische Energie dem Elektromotor gezielt zuzuführen, sodass das von dem Benutzer angeforderte Drehmoment oder die angeforderte Drehzahl eingestellt werden. Die Elektronik 9 weist dabei vorliegend eine Leiterplatte 10 auf, auf welcher Elektronikkomponenten, wie beispielsweise der bereits genannte Mikroprozessor, angeordnet sind. Die Leiterplatte 10 ist dabei in einer Gehäuseschale 11 in dem Gehäuse 12 des Griffteils 2 gehalten.

Unterhalb der Gehäuseschale 11, also zwischen der Elektronik 9 und einer Schnittstelle 13 des Griffteils 2 zu dem Energiespeichermodul 7, ist ein Identifikationsmodul 14 angeordnet, das ein eigenes Gehäuse 15 aufweist. Das Griffteil 2 weist eine Aussparung 16 auf, in welcher das Gehäuse 15 eingesteckt gehalten ist. Das Gehäuse 12 der Handwerkzeugmaschine 1 ist dabei beispielsweise zweiteilig mi zwei Gehäusehalbschalen ausgebildet, sodass bei der Montage das Gehäuse 15 zusammen mit der Elektronik 9 und den weiteren Komponenten der Elektrohandwerkzeugmaschine 1 in eine Gehäusehälfte eingesteckt werden und anschließend die zweite Gehäusehälfte aufgelegt wird. Auch ist es denkbar, dass eine der Gehäusehälften des Gehäuses 12 eine Öffnung aufweist, durch welche das Identifikationsmodul 14 in das Gehäuse 12 einschiebbar ist. Diese Öffnung ist dann zweckmäßigerweise durch ein Verschlusselement beziehungsweise Deckel verschließbar. Das Identifikationsmodul 14 ist durch seine Anordnung in dem Gehäuse 12 in die Handwerkzeugmaschine 1 integriert.

Figur 3 zeigt eine vereinfachte Darstellung des Identifikationsmoduls 14. Das Gehäuse 15 ist ebenfalls wannenförmig ausgebildet und weist somit eine Aufnahmevertiefung auf, in welcher Komponenten des Identifikationsmoduls 14 angeordnet sind. Bei den Komponenten handelt es sich insbesondere um zwei Knopfzellen 17, die einen eigenen Energiespeicher 18 des Identifikationsmoduls 14 bilden. Als weitere Komponente ist in der Aufnahmevertiefung des Gehäuses 15 eine Elektronik 19 des Identifikationsmoduls 14 angeordnet. Die Elektronik 19 umfasst eine Leiterplatte 20, auf welcher insbesondere ein Datenspeicher 21, ein Mikroprozessor 22 und ein Transponder 23 mit einer Sendeeinheit und mit einer Empfangseinheit angeordnet sind. In dem Datenspeicher 21 sind insbesondere Identifikationsdaten der Handwerkzeugmaschine 1, wie beispielsweise eine Seriennummer, Gerätenummer, Informationen über den Eigentürmer, Gebrauchszustand oder Dergleichen hinterlegt oder hinterlegbar. Empfängt der Transponder 23 eine Identifikationsanfrage, so fordert der Mikroprozessor 22 die entsprechenden Informationen aus dem Datenspeicher 21 an und sendet sie durch den Transponder 23 aus. Ändern sich beispielsweise Informationen bezüglich des Eigentümers der Handwerkzeugmaschine 1, so können diese mittels des Transponders 23 und des Mikroprozessors 22 in den Datenspeicher 21 gespeichert und dadurch die Identifikation der Handwerkzeugmaschine 1 aktualisiert werden. Dadurch, dass das Identifikationsmodul 14 einen eigenen Energiespeicher 18 aufweist, ist der Betrieb des Transponders 23 beziehungsweise die Identifikation der Handwerkzeugmaschine 1 unabhängig von der Speicherkapazität des Energiespeichermoduls 7. Dadurch ist es insbesondere auch möglich, das Handwerkzeug 1 drahtlos per Funk zu identifizieren, wenn an dem Griffteil 2 kein Energiespeichermodul 7 angeordnet und die Elektrohandwerkzeugmaschine 1 insofern stromlos ist.

Je nach Ausführungsform des Identifikationsmoduls 14 können selbstverständlich auch mehr oder weniger Knopfzellen beziehungsweise Energiespeichereinheiten in dem Gehäuse 15 des Identifikationsmoduls 14 vorgesehen sein. Mehrere Knopfzellen beziehungsweise Energiespeichereinheiten haben den Vorteil, dass der Austausch einer Knopfzelle den Betrieb des Identifikationsmoduls 14 nicht unterbricht, da das Identifikationsmodul 14 durch die verbleibende oder die verbleibenden Knopfzellen beziehungsweise Energiespeichereinheiten weiter betrieben wird. Dabei kann auch vorgesehen sein, dass zumindest eine Energiespeichereinheit, wenn mehrere Energiespeichereinheiten vorgesehen sind, ein von den übrigen Energiespeichereinheiten abweichendes Spannungsniveau aufweist.

Auf der Leiterplatte 20 ist vorzugsweise außerdem eine drahtlose Schnittstelle, vorzugsweise eine Bluetooth-Schnittstelle, ausgebildet beziehungsweise angeordnet, über welche eine drahtlose Kommunikation mit beispielsweise einer Zentraleinheit stattfinden kann. Die Bluetooth-Schnittstelle kann dabei alternativ oder zusätzlich zu dem Transponder 23 vorgesehen sein. Weiterhin ist bevorzugt vorgesehen, dass die Leiterplatte 20 eine drahtgebundene Schnittstelle zur der Elektronik 9 der Elektrohandwerkzeugmaschine 1 aufweist, beispielsweise eine Steckkontakt-Schnittstelle. Durch diese drahtgebundene Schnittstelle können dann Benutzungsdaten der Handwerkzeugmaschine 1 abgefragt werden, wie beispielsweise Betriebsdauer, Fehlermeldungen oder dergleichen. Diese Informationen werden in dem Datenspeicher 21 hinterlegt und gegebenenfalls, insbesondere bei Abfrage an den Transponder 23, mit den Identifikationsdaten mitgesendet. Dabei ist beispielsweise vorgesehen, dass die Leiterplatte 20 einen drahtgebundene Schnittstelle zu einem oder mehreren Sensoren oder Aktuatoren der Handwerkzeugmaschine 1 aufweist, wie beispielsweise zu einem Drehratensensor, einem Temperatursensor, dem Elektromotor und/oder einer Bremse des Elektrohandwerkzeugs 1. Durch die vorteilhafte Ausbildung des Identifikationsmoduls 14 wird erreicht, dass eine Kommunikation über die Elektronik 9 der Handwerkzeugmaschine 1 selbst nicht mehr notwendig ist. Dadurch lässt sich eine herkömmliche Handwerkzeugmaschine 1 beispielsweise durch das Identifikationsmodul 14 auch einfach in seinem Funktionsumfang erweitern.

Für den Betrieb der Handwerkzeugmaschine 1 ergeben sich insbesondere in Bezug auf das Energiemanagement des Identifikationsmoduls 14 unterschiedliche Varianten, die im Folgenden beschrieben werden sollen:
In einer ersten Variante, wird das Identifikationsmodul 14 ausschließlich von dem Energiespeicher 18 mit Energie versorgt, wie bereit zuvor erwähnt.

In einer zweiten Variante wird das Identifikationsmodul 14 mit Strom von dem Energiespeichermodul 7 versorgt, insbesondere wenn der Betätigungsschalter 6 gedrückt beziehungsweise betätigt wird. Insbesondere ist dabei vorgesehen, dass während das Identifikationsmodul 14 mit Strom von dem Energiespeichermodul 7 versorgt wird, sein Energiespeicher 18 außerdem durch den zur Verfügung gestellten Strom des Energiespeichermoduls 7 aufgeladen wird.

In einer dritten Variante wird das Identifikationsmodul 14 mit Strom aus einer Netzleitung versorgt, wenn die Elektrohandwerkzeugmaschine 1 durch einen Netzstecker mit einer externen Stromversorgung verbunden und der Betätigungsschalter 6 insbesondere betätigt beziehungsweise gedrückt ist.

Liegt an einer Netzleitung, also an einer mit einem externen Stromversorger verbundenen Stromleitung der Elektrohandwerkzeugmaschine 1 eine Spannung an, so wird das Identifikationsmodul 14 in einer vierten Variante über die Netzleitung mit Strom versorgt, insbesondere unabhängig von einem Betätigungszustand des Betätigungsschalters 6.

In einer fünften Variante ist vorgesehen, dass, wenn die Handwerkzeugmaschine 1 durch die Netzleitung mit einer externen Spannungs-/Stromversorgung verbunden ist, und wenn der Betätigungsschalter 6 betätigt/gedrückt wird, das Identifikationsmodul 14 über die Netzleitung mit Strom versorgt und der Energiespeicher 18 aufgeladen wird.

In einer sechsten Variante ist vorgesehen, dass dann, wenn an der Netzleitung eine Spannung anliegt, das Identifikationsmodul 14 über die Netzleitung mit Strom versorgt und der Energiespeicher 18 aufgeladen wird.

Zweckmäßigerweise ist vorgesehen, dass dann, wenn das Energiespeichermodul 7 an der Schnittstelle 13 angeschlossen ist, das Identifikationsmodul 14 durch das Energiespeichermodul 7 mit Strom versorgt wird, solange die Betriebsspannung des Energiespeichermoduls 7 einen vorgebbaren Spannungsgrenzwert nicht unterschreitet. Dadurch wird ein Unterspannungsschutz gewährleistet. Sobald der Spannungsgrenzwert unterschritten wird, schaltet die Stromversorgung des Identifikationsmoduls 14 auf eine Stromversorgung durch den eigenen Energiespeicher 18 um. Besonders bevorzugt ist der Energiespeicher 18 derart ausgebildet, dass er induktiv aufladbar ist, wodurch sich einfache Auflademöglichkeiten durch externe Aufladegeräte ergeben.

Das Gehäuse 15 ist vorzugsweise durch ein Deckelement verschlossen, sodass die elektrischen Komponenten des Identifikationsmoduls 14 im Gehäuse 15 vor Staub oder Wasser sicher geschützt sind. Insbesondere kann dabei vorgesehen sein, dass die Aufnahmevertiefung und die darin befindlichen elektrischen Komponenten mit einer elektrischen nicht leitfähigen Vergussmasse vergossen sind. Durch eine Öffnung zumindest einer der Gehäusehalbschalen des Gehäuses 12 der Handwerkzeugmaschine 1 kann das Identifikationsmodul 14 im Fehlerfall oder zur Wartung vollständig ausgetauscht werden.

Alternativ ist es denkbar, das Gehäuse 15 derart zu gestalten, dass der Energiespeicher 18 austauschbar, das heißt nicht vergossen in dem Gehäuse 15 angeordnet ist. So ist beispielsweise vorgesehen, dass dem Energiespeicher 18 ein verlagerbares Verschlusselement, wie beispielsweise ein Deckel oder dergleichen an dem Gehäuse 15 zugeordnet ist, um den Energiespeicher 18 bei Bedarf aus dem Gehäuse 15 entnehmen zu können. Das Gehäuse 15 weist dazu eine entsprechende Energiespeicheraufnahme auf, in welcher der Energiespeicher anordenbar und durch das Verschlusselement vor äußeren Einflüssen schützbar ist.

Alternativ oder zusätzlich ist vorgesehen, dass das Gehäuse 12 der Handwerkzeugmaschine 1 ebenfalls ein verlagerbares Verschlusselement zum Freigeben oder Verschließen einer Energiespeicheraufnahme für den Energiespeicher 18 aufweist, sodass der Energiespeicher direkt austauschbar ist, ohne dass das Gehäuse 12 der Handwerkzeugmaschine 1 demontiert werden muss. So weist das Gehäuse 12 beispielsweise im Bereich des Identifikationsmoduls 14 beziehungsweise im Bereich der Aussparung 16 einen verschwenkbaren oder verschiebbaren Deckel 24 zum Freigeben und Verschließen der Aussparung 16 und/oder des Identifikationsmoduls 14 insgesamt auf. Dadurch lässt sich ein einfacher Austausch des Energiespeichers oder des gesamten Identifikationsmoduls 14 erreichen.

Vorzugsweise ist das Gehäuse 15 des Identifikationsmoduls 14 in dem Gehäuse 12 formschlüssig, insbesondere durch Rippen an der Innenseite der Gehäusehalbschalten des Gehäuses 12, fixiert. Durch die Anordnung zwischen der Elektronik 9 und der Schnittstelle 13 wird erreicht, dass das Identifikationsmodul 14 in allen Handwerkzeugmaschinen 1 verwendet werden kann, die den gleichen Aufbau in Bezug auf die Schnittelle 13 aufweisen.

Während in dem vorliegenden Ausführungsbeispiel davon ausgegangen wird, dass die Komponenten des Identifikationsmoduls 14 alle in oder an dem Gehäuse 15 angeordnet sind, ist es gemäß einem weiteren Ausführungsbeispiel (hier nicht dargestellt) denkbar, einen Teil der Komponenten, auch örtlich getrennt voneinander, beispielsweise an dem Gehäuse 12 der Handwerkzeugmaschine 1 zu platzieren. Dadurch kann eine Anpassung an den Bauraum der jeweiligen Handwerkzeugmaschine 1 auf einfache Art und Weise erfolgen.

Durch die Bluetooth-Schnittstelle kann beispielsweise auch eine Kommunikation mit einem Mobiltelefon oder Mobilgerät eines Benutzers erfolgen, um bestimmte Daten abzufragen oder Einstellung der Handwerkzeugmaschine 1 vorzunehmen. Auch ist denkbar, dass über die drahtlose Schnittstelle eine Kommunikation mit anderen Handwerkzeugmaschinen (Tool-to-Tool-Kommunikation) stattfindet.

## Patentansprüche

1. Handwerkzeugmaschine (1), insbesondere Elektrohandwerkzeugmaschine, mit einem Identifikationsmodul (14), das einen Transponder (23) aufweist, der zumindest einen Datenspeicher (21) zum Speichern von Identifikationsdaten sowie ein Funkmodul zum Versenden der Identifikationsdaten umfasst, **wobei** das Identifikationsmodul (14) in einem Gehäuse (12) der Handwerkzeugmaschine (1) integriert angeordnet ist, und wobei das Identifikationsmodul (14) elektrisch mit einem Energiespeicher (7) der Handwerkzeugmaschine (1) verbunden oder verbindbar ist, und wobei das Identifikationsmodul (14) einen eigenen Energiespeicher (18) aufweist, **dadurch gekennzeichnet, dass** der eigene Energiespeicher (18) austauschbar ausgebildet ist, und dass das Gehäuse (12) der Handwerkzeugmaschine (1) einen eine dem eigenen Energiespeicher (18) zugeordnete Austauschöffnung verschließenden oder freigebenden Deckel (24) aufweist, wobei der Deckel (24) verschwenkbar, verschiebbar oder lösbar an dem Gehäuse (12) der Handwerkzeugmaschine (1) gehalten ist.

2. Handwerkzeugmaschine nach Anspruch 1, **dadurch gekennzeichnet, dass** das Gehäuse (12) eine Aufnahmeaussparung (16) aufweist, in welcher das Identifikationsmodul (14) angeordnet ist.

3. Handwerkzeugmaschine nach einem der vorhergehenden Ansprüche,
**dadurch gekennzeichnet, dass** das Identifikationsmodul (14) in der Aufnahmeaussparung (16) austauschbar gehalten ist.

4. Handwerkzeugmaschine nach einem der vorhergehenden Ansprüche,
**dadurch gekennzeichnet, dass** das Identifikationsmodul (14) mit einer Elektronik (9) der Handwerkzeugmaschine (1) drahtgebunden oder drahtlos gekoppelt ist.

5. Handwerkzeugmaschine nach einem der vorhergehenden Ansprüche,
**dadurch gekennzeichnet, dass** der eigene Energiespeicher (18) wiederaufladbar ausgebildet und elektrisch, insbesondere mit einer Energieversorgung der Handwerkzeugmaschine (1) verbunden/verbindbar ist.

6. Handwerkzeugmaschine nach einem der vorhergehenden Ansprüche,
**dadurch gekennzeichnet, dass** das Identifikationsmodul (14) ein eigenes Gehäuse (15) aufweist,

## Claims

1. Hand-held power tool (1), in particular electric hand-held power tool, having an identification module (14), which has a transponder (23) that comprises at least one data storage (21) for storing identification data, and comprises a radio module for transmitting the identification data, **wherein** the identification module (14) is arranged such that it is integrated in a housing (12) of the hand-held power tool (1), and wherein the identification module (14) is electrically connected, or can be electrically connected, to an energy storage device (7) of the hand-held power tool (1), and wherein the identification module (14) has its own energy storage device (18), **characterized in that** the identification module's own energy storage device (18) is realized so as to be replaceable and **in that** the housing (12) of the hand-held power tool (1) has a cover (24) that closes or uncovers a replacement opening assigned to the identification module's own energy storage device (18), wherein the cover (24) is held pivotably, displaceably or detachably on the housing (12) of the hand-held power tool (1).

2. Hand-held power tool according to Claim 1, **characterized in that** the housing (12) has a receiving recess (16), in which the identification module (14) is arranged.

3. Hand-held power tool according to either one of the preceding claims, **characterized in that** the identification module (14) is held in a replaceable manner in the receiving recess (16).

4. Hand-held power tool according to any one of the preceding claims, **characterized in that** the identification module (14) is coupled in a wired manner or wirelessly to electronics (9) of the hand-held power tool (1).

5. Hand-held power tool according to any one of the preceding claims, **characterized in that** the identification module's own energy storage device (18) is realized so as to be rechargeable, and is electrically connected, or can be electrically connected, in particular to an energy supply of the hand-held power tool (1).

6. Hand-held power tool according to any one of the preceding claims, **characterized in that** the identification module (14) has its own housing (15) .

## Revendications

1. Machine-outil portative (1), notamment machine-outil électroportative, comprenant un module d'identification (14), qui possède un transpondeur (23), lequel comporte au moins une mémoire de données (21) destinée à mémoriser des données d'identification ainsi qu'un module radio destiné à émettre les données d'identification,
le module d'identification (14) étant disposé de manière intégrée dans un boîtier (12) de la machine-outil portative (1), et le module d'identification (14) étant relié ou pouvant être relié électriquement à un accumulateur d'énergie (7) de la machine-outil portative (1), et le module d'identification (14) possédant un accumulateur d'énergie propre (18),
**caractérisée en ce que** l'accumulateur d'énergie propre (18) est configuré de manière remplaçable, et **en ce que** le boîtier (12) de la machine-outil portative (1) possède un couvercle (24) qui ferme ou qui ouvre une ouverture de remplacement associée à l'accumulateur d'énergie propre (18), le couvercle (24) étant maintenu au niveau du boîtier (12) de la machine-outil portative (1) de manière pivotante, coulissante ou amovible.

2. Machine-outil portative selon la revendication 1, **caractérisée en ce que** le boîtier (12) possède une cavité d'accueil (16) dans laquelle est disposé le module d'identification (14).

3. Machine-outil portative selon l'une des revendications précédentes, **caractérisée en ce que** le module d'identification (14) est maintenu de manière remplaçable dans la cavité d'accueil (16).

4. Machine-outil portative selon l'une des revendications précédentes, **caractérisée en ce que** le module d'identification (14) est connecté par liaison filaire ou sans fil à une électronique (9) de la machine-outil portative (1).

5. Machine-outil portative selon l'une des revendications précédentes, **caractérisée en ce que** l'accumulateur d'énergie propre (18) est configuré de manière rechargeable et est relié/peut être relié électriquement notamment à une source d'énergie de la machine-outil portative (1).

6. Machine-outil portative selon l'une des revendications précédentes, **caractérisée en ce que** le module d'identification (14) possède un boîtier propre (15) .
